# EUROPEAN PATENT SPECIFICATION

(11) **EP 1 428 427 B1**
(45) Date of publication and mention of the grant of the patent: **27.06.2007**
(21) Application number: 04075401.2
(22) Date of filing: 08.02.2000
(51) Int. Cl.: A01J 5/017

(54) **A method of determining the anticipated teat position of an animal**
Verfahren zur Bestimmung der erwarteten Position des Euters eines Tieres
Procédé de détermination de la position prévue du trayon d'un animal

(30) Priority: 09.02.1999 NL 1011255
(43) Date of publication of application: 16.06.2004
(62) Divisional of application: 00200399.4
(73) Proprietor: MAASLAND N.V., 3147 PA Maassluis (NL)
(72) Inventor: de Groen, Fransiscus Johannes Adrianus, 3223 ME Hellevoetsluis (NL); Van't Land, Aart, 4411 RV Rilland (NL)
(74) Representative: Corten, Maurice Jean F.M.

(56) References cited:
- EP-A- 0 188 303
- EP-A- 0 572 068

## Description

The invention relates to a method of determining the anticipated teat position of an animal according claim 1.

In the European patent application EP-188303-A2, an implement for automatic milking an animal with an arm for attaching teat cups to the teats of the animal is disclosed. The time elapsed between milking operations is stored in a computer. The positions of the teat cups during a milking operation are recorded and stored for using this data during a subsequent milking operation.

The method according the invention makes it possible to determine quickly the anticipated teat position relative to the reference point without making use of sensors, such as e.g. a laser sensor on an ultrasonic sensor. In the above described method, the determination or calculation of said anticipated teat position may take place on the basis of an algorithm or a predetermined schedule.

The invention also relates to a method in which, after the anticipated teat position has been determined or calculated, said anticipated teat position is used for activating an automatic or semiautomatic device for treating and/or inspecting the relevant teat.

Said anticipated teat position is used in particular for roughly positioning the automatic or semiautomatic device for treating the relevant teat. It will be obvious that, when roughly positioning said devices, one should correct the anticipated teat co-ordinates by a correction factor for the purpose of positioning the device remotely from the relevant teat, because the anticipated teat co-ordinates may be equal to the actual teat co-ordinates. After the anticipated teat position has been determined or calculated, according to an inventive feature, the current actual teat position relative to the reference point is measured by means of a sensor, such as e.g. a laser or an ultrasonic sensor, and possibly stored in a memory.

By means of the current actual teat position it is possible to bring the automatic or semiautomatic device for treating the relevant teat accurately towards the teat for the purpose of subsequently treating same. In this manner a fine-positioning of said device is effected. The current actual teat position may further be used for completing the above-mentioned schedule or for adjusting the algorithm.

According to an inventive feature, the anticipated teat position is used for positioning a teat cup of a milking robot.

According to another inventive feature, the anticipated teat position is used for positioning a cleaning device for cleaning the relevant teat. Said cleaning device may constitute part, of course, of a milking robot.

According to again another inventive feature, the anticipated teat position is used for positioning a foremilking machine for foremilking the relevant teat. Said foremilking machine may also constitute part of a milking robot. It will be obvious that the above-mentioned methods may be applied for all the teats of the relevant animal.

The invention also relates to an implement for automatically milking and/or pre-treating the teats of an animal to be milked, which implement is provided with a milking robot for automatically connecting teat cups to the teats of an animal to be milked and/or with a pre-treatment device for pre-treating the teats of an animal to be milked, said implement being suitable for applying the above-described method.

In accordance with another embodiment of the invention, it is also possible to determine the anticipated teat position relative to the reference point on the basis of the anticipated milk yield of the relevant animal since the last milking. In order to determine the anticipated teat position, a schedule is made or input in the memory, while for the relevant teat the actual teat co-ordinates are measured before milking and the milk yield is measured after milking the udder and/or the udder quarter. Due to the fact that the period of time between two milkings of the relevant animal is usually irregular, the schedule contains a large number of actual teat co-ordinates with the corresponding milk yield. The anticipated milk yield of the relevant animal may be determined on the basis of the actual milk yield. It will be obvious that it is also possible to use, instead of a schedule, an algorithm for determining the anticipated teat position on the basis of the anticipated milk yield and the corresponding actual teat position.

## Claims

1. A method of determining the anticipated teat position of an animal, such as a cow for example, in which method, at the point of time t1, after a corresponding udder quarter has been milked, the actual teat position for a teat relative to a reference point is determined by measurement and is stored in a memory, and in which method, at a point of time t2, the anticipated teat position of the relevant teat relative to the reference point for said animal is again determined or calculated on the basis of the time which has elapsed between t1 and t2.

2. A method as claimed in claim 1, **characterized in that**, after the anticipated teat position has been determined or calculated, said anticipated teat position is used for activating an automatic or semiautomatic device for treating and/or inspecting the relevant teat.

3. A method as claimed in claim 2, **characterized in that**, after the anticipated teat position has been determined or calculated, said anticipated teat position is used in particular for roughly positioning the automatic or semiautomatic device for treating the relevant teat.

4. A method as claimed in any one of the preceding claims, **characterized in that**, after the anticipated teat position has been determined or calculated, the current actual teat position relative to the reference point is measured by means of a sensor, such as e.g. a laser or an ultrasonic sensor, and possibly stored in a memory.

5. A method as claimed in any one of claims 2 to 4, **characterized in that** the anticipated teat position is used for positioning a teat cup of a milking robot.

6. A method as claimed in any one of claims 2 to 5, **characterized in that** the anticipated teat position is used for positioning a cleaning device for cleaning the relevant teat.

7. A method as claimed in any one of claims 2 to 6, **characterized in that** the anticipated teat position is used for positioning a foremilking machine for foremilking the relevant teat.

8. An implement for automatically milking and/or pre-treating the teats of an animal to be milked, which implement is provided with a milking robot for automatically connecting teat cups to the teats of an animal to be milked and/or with a pre-treatment device for pre-treating the teats of an animal to be milked, said implement being suitable for applying the method as claimed in any one of claims 1 to 7.

## Patentansprüche

1. Verfahren zum Ermitteln der voraussichtlichen Zitzenposition eines Tieres, wie z. B. einer Kuh, wobei bei dem Verfahren zum Zeitpunkt t1 nach dem Melken eines entsprechenden Euterviertels die aktuelle Zitzenposition für eine Zitze relativ zu einem Bezugspunkt durch Messen ermittelt und in einem Speicher gespeichert wird, und wobei bei dem Verfahren zu einem Zeitpunkt t2 die voraussichtliche Zitzenposition der entsprechenden Zitze relativ zu dem Bezugspunkt für dieses Tier auf der Basis der zwischen t1 und t2 verstrichenen Zeit erneut ermittelt oder berechnet wird.

2. Verfahren nach Anspruch 1,
**dadurch gekennzeichnet, daß** nach dem Ermitteln oder Berechnen der voraussichtlichen Zitzenposition die voraussichtliche Zitzenposition dazu verwendet wird, eine automatische oder halbautomatische Vorrichtung zum Behandeln und/oder Überprüfen der betreffenden Zitze zu aktivieren.

3. Verfahren nach Anspruch 2,
**dadurch gekennzeichnet, daß** nach dem Ermitteln oder Berechnen der voraussichtlichen Zitzenposition die voraussichtliche Zitzenposition insbesondere dazu verwendet wird, die automatische oder halbautomatische Vorrichtung zum Behandeln der betreffenden Zitze grob zu positionieren.

4. Verfahren nach einem der vorhergehenden Ansprüche,
**dadurch gekennzeichnet, daß** nach dem Ermitteln oder Berechnen der voraussichtlichen Zitzenposition die gegenwärtige aktuelle Zitzenposition relativ zu dem Bezugspunkt mit Hilfe eines Sensors, wie z. B. einem Laserstrahl- oder einem Ultraschallsensor, gemessen und eventuell in einem Speicher gespeichert wird.

5. Verfahren nach einem der Ansprüche 2 bis 4,
**dadurch gekennzeichnet, daß** die voraussichtliche Zitzenposition dazu verwendet wird, einen Zitzenbecher eines Melkroboters zu positionieren.

6. Verfahren nach einem der Ansprüche 2 bis 5,
**dadurch gekennzeichnet, daß** die voraussichtliche Zitzenposition dazu verwendet wird, eine Reinigungsvorrichtung zum Reinigen der betreffenden Zitze zu positionieren.

7. Verfahren nach einem der Ansprüche 2 bis 6,
**dadurch gekennzeichnet, daß** die voraussichtliche Zitzenposition dazu verwendet wird, eine Vormelkmaschine zum Vormelken der betreffenden Zitze zu positionieren.

8. Vorrichtung zum automatischen Melken und/oder Vorbehandeln der Zitzen eines zu melkenden Tieres, wobei die Vorrichtung mit einem Melkroboter zum automatischen Anschließen von Zitzenbechern an die Zitzen eines zu melkenden Tieres und/oder mit einer Vorbehandlungsvorrichtung zum Vorbehandeln der Zitzen eines zu melkenden Tieres versehen ist, und wobei die Vorrichtung zum Durchführen des Verfahrens nach einem der Ansprüche 1 bis 7 geeignet ist.

## Revendications

1. Procédé de détermination de la position anticipée d'un trayon d'un animal, tel qu'une vache par exemple, procédé dans lequel, à l'instant t1, après qu'un quartier de pis correspondant a été trait, la position effective de trayon pour un trayon par rapport à un point de référence est déterminée par mesure et est stockée dans une mémoire, et procédé dans lequel, à un instant t2, la position anticipée de trayon du trayon concerné par rapport au point de référence pour ledit animal est de nouveau déterminée ou calculée sur la base du temps qui s'est écoulé entre t1 et t2.

2. Procédé selon la revendication 1, **caractérisé en ce que**, après que la position anticipée de trayon a été déterminée ou calculée, ladite position anticipée de trayon est utilisée pour activer un dispositif automatique ou semi-automatique pour traiter et/ou inspecter le trayon concerné.

3. Procédé selon la revendication 2, **caractérisé en ce que**, après que la position anticipée de trayon a été déterminée ou calculée, ladite position anticipée de trayon est utilisée en particulier pour positionner grossièrement le dispositif automatique ou semi-automatique pour traiter le trayon concerné.

4. Procédé selon l'une quelconque des revendications précédentes, **caractérisé en ce que**, après que la position anticipée de trayon a été déterminée ou calculée, la position effective actuelle de trayon par rapport au point de référence est mesurée au moyen d'un capteur, tel que par exemple un laser ou un capteur ultrasonore, et éventuellement stockée dans une mémoire.

5. Procédé selon l'une quelconque des revendications 2 à 4, **caractérisé en ce que** la position anticipée de trayon est utilisée pour positionner un godet de trayon d'un robot de traite.

6. Procédé selon l'une quelconque des revendications 2 à 5, **caractérisé en ce que** la position anticipée de trayon est utilisée pour positionner un dispositif de nettoyage pour nettoyer le trayon concerné.

7. Procédé selon l'une quelconque des revendications 2 à 6, **caractérisé en ce que** la position anticipée de trayon est utilisée pour positionner une machine des premiers jets pour retirer le premier lait du trayon concerné.

8. Instrument pour traire automatiquement et/ou prétraiter les trayons d'un animal à traire, lequel instrument est pourvu d'un robot de traite pour connecter automatiquement des godet de trayon aux trayons d'un animal à traire et/ou avec un dispositif de prétraitement pour prétraiter les trayons d'un animal à traire, ledit instrument étant approprié pour appliquer le procédé selon l'une quelconque des revendications 1 à 7.
